# EUROPEAN PATENT APPLICATION

(11) **EP 3 439 354 A1**
(43) Date of publication of application: **06.02.2019**
(21) Application number: 16896211.6
(22) Date of filing: 16.06.2016
(51) Int. Cl.: H04W 24/10

(54) **METHOD AND APPARATUS FOR MANAGING APPLICATION STATE**

(30) Priority: 30.03.2016 CN 201610193124
(71) Applicant: ZTE Corporation, Shenzhen, Guangdong 518057 (CN)
(72) Inventor: WU, Hao, Shenzhen Guangdong 518057 (CN)
(74) Representative: Nordmeyer, Philipp Werner
(86) International application number: PCT/CN2016/086033
(87) International publication number: WO 2017/166438

(57) **Abstract**

Disclosed is a method for managing an application state, the method being applied to a service platform. The method includes: sending a monitoring request message to a bearer network element, wherein the monitoring request message carries information about an event to be monitored and identification information about a machine-to-machine (M2M) terminal to be monitored; and after receiving a monitoring report sent by the bearer network element, managing state information about an application corresponding to the monitored M2M terminal according to the monitoring report, wherein the monitoring report carries information about the monitored event triggering the report and detected by the bearer network element, and the identification information about the M2M terminal.

## Description

### TECHNICAL FIELD

The present disclosure relates to, but not limited to, a field of Machine Type Communication technology, in particular, to a method and an apparatus for managing an application state.

### BACKGROUND

Machine Type Communication (MTC) network includes numerous Machine-To-Machine (M2M) terminals on which M2M applications run. The M2M applications are connected to a network-side service platform via an underlying bearer network such as Global System for Mobile Communication (GSM), Wideband Code Division Multiple Access (WCDMA), Wireless Fidelity (WiFi), and the like. A manager of a M2M application may monitor the running state of the M2M terminals by accessing the network-side service platform.

The service platform takes charge of managing application entities or public service entities on the M2M terminals. Thus, besides managing data and identifications related to the applications, the service platform has to be able to get accessibility information about the application entities or the public service entities. For example, if a physical bearer (M2M terminal) of an application entity is disconnected from the bearer network, or is re-connected to the network after being disconnected, the service platform needs to obtain and record the accessibility information in order that other application entities or the public service entities can select accurately a good time to send a request to the application entity.

In a traditional monitoring scenario, for example, a manager of an intelligent traffic monitoring system may be connected to the network service platform via an internet, issue an instruction to the service platform to monitor connection states of surveillance cameras of a certain road or certain roads, and receive alarming information from the service platform when it is detected that the surveillance camera(s) is/are disconnected. That is, the traditional monitoring is achieved based on operations of the business layer or the application layer. For example, in order to know whether a certain M2M terminal or certain M2M terminals is/are online, it is required that the application or the service platform sends directly a polling instruction to the M2M terminal(s), if feedback is received normally, it means that the M2M terminal(s) is/are still online; if no feedback is received from the M2M terminal(s) within a predefined time period, it means that the M2M terminal(s) is/are disconnected.

Thus, according to the traditional manner for obtaining the application states, the service platform sends testing data to an application entity to query whether it is online, if it is not online, the service platform will send the testing data to the application entity repeatedly at regular intervals thereafter to query whether it is online. Consequently, a huge amount of data is generated between the bearer network and the service platform, which results in a large consumption of network resources of the monitoring system.

### SUMMARY

The following is an overview of subjects to be described in detail. The overview is not for limiting a protective scope of claims.

The present disclosure provides a method and an apparatus for managing an application state, which may save network resources of the machine type communication monitoring system.

An embodiment of the present disclosure provides a method for managing an application state, the method being applied to a service platform, and the method including: sending a monitoring request message to a bearer network element, wherein the monitoring request message carries information about an event to be monitored and identification information about a machine-to-machine (M2M) terminal to be monitored; and after receiving a monitoring report sent by the bearer network element, managing state information about an application corresponding to the monitored M2M terminal according to the monitoring report, wherein the monitoring report carries information about the monitored event triggering the report and detected by the bearer network element, and the identification information about the M2M terminal.

According to an embodiment, the event to be monitored includes at least one of the following events: a M2M terminal disconnection event, and a M2M terminal connection recovery event.

According to an embodiment, the step of managing state information about the application corresponding to the monitored M2M terminal according to the monitoring report includes: querying an application entity resource carried by the M2M terminal triggering the monitoring report according to an identification, which is specified in the monitoring report, of the M2M terminal; and after finding the application entity resource carried by the M2M terminal, updating an attribute value of the application entity resource according to contents of the monitoring report.

According to an embodiment, the step of updating the attribute value of the application entity resource according to the contents of the monitoring report includes: when a connection state of the M2M terminal carrying the application entity resource turns to a disconnected state from a connected state, updating a value of an attribute "state of accessibility" of the application entity resource as an "inaccessible state"; when the connection state of the M2M terminal carrying the application entity resource is recovered to the connected state from the disconnected state, updating the value of the attribute "state of accessibility" of the application entity resource as an "accessible state".

An embodiment of the present invention provides a method for managing an application state, the method being applied to a bearer network element, and the method including: receiving a monitoring request message sent by a service platform, wherein the monitoring request message carries information about an event to be monitored and identification information about a machine-to-machine (M2M) terminal to be monitored; and after detecting the event to be monitored specified by the service platform, sending a monitoring report to the service platform, wherein the monitoring report carries information about the monitored event triggering the report and the identification information about the M2M terminal.

According to an embodiment, the event to be monitored includes at least one of the following events: a M2M terminal disconnection event, and a M2M terminal connection recovery event.

An embodiment of the present invention provides an apparatus for managing an application state, the apparatus being applied to a service platform, and the apparatus including: a requesting module configured to send a monitoring request message to a bearer network element, wherein the monitoring request message carries information about an event to be monitored and identification information about a machine-to-machine (M2M) terminal to be monitored; and a report receiving and processing module configured to, after receiving a monitoring report sent by the bearer network element, manage state information about an application corresponding to the monitored M2M terminal according to the monitoring report, wherein the monitoring report carries information about the monitored event triggering the report and detected by the bearer network element, and the identification information about the M2M terminal.

According to an embodiment, the event to be monitored includes at least one of the following events: a M2M terminal disconnection event, and a M2M terminal connection recovery event.

According to an embodiment, the report receiving and processing module is configured to manage state information about an application corresponding to the monitored M2M terminal according to the monitoring report in the following manner: querying an application entity resource carried by the M2M terminal triggering the monitoring report according to an identification, which is specified in the monitoring report, of the M2M terminal; and after finding the application entity resource carried by the M2M terminal, updating an attribute value of the application entity resource according to contents of the monitoring report.

According to an embodiment, the report receiving and processing module is configured to update an attribute value of the application entity resource according to the contents of the monitoring report in the following manner: when a connection state of the M2M terminal carrying the application entity resource turns to a disconnected state from a connected state, updating a value of an attribute "state of accessibility" of the application entity resource as an "inaccessible state"; when the connection state of the M2M terminal carrying the application entity resource is recovered to the connected state from the disconnected state, updating the value of the attribute "state of accessibility" of the application entity resource as an "accessible state".

An embodiment of the present invention provides an apparatus for managing an application state, the apparatus being applied to a bearer network element, and the apparatus including: a message receiving module configured to receive a monitoring request message sent by a service platform, wherein the monitoring request message carries information about an event to be monitored and identification information about a machine-to-machine (M2M) terminal to be monitored; and a reporting module configured to, after detecting the event to be monitored specified by the service platform, send a monitoring report to the service platform, wherein the monitoring report carries information about the monitored event triggering the report and the identification information about the M2M terminal.

According to an embodiment, the event to be monitored includes at least one of the following events: a M2M terminal disconnection event, and a M2M terminal connection recovery event.

An embodiment of the present invention further provides a computer-readable storage medium storing computer-executable instructions which, when executed by a processor, cause the processor to perform the above methods.

Comparing with the existing art, the methods and the apparatus for managing an application state provided by embodiments of the present disclosure cause a service platform to issue an event to be monitored to a bearer network, instruct the bearer network to monitor the state of a specified M2M terminal in accordance with the requirement of a monitored event and report a monitoring result when a condition is met, and manage the application entity according to the monitoring result. The present disclosure can save the network resources of the MTC monitoring system.

Other aspects may be appreciated after reading and understanding the drawings and the detailed descriptions.

### BRIEF DESCRIPTION OF THE DRAWINGS

FIG. 1 is a flow chart of a method (for a service platform) for managing an application state according to an embodiment of the present disclosure.
FIG. 2 is a flow chart of a method (for a bearer network element) for managing an application state according to an embodiment of the present disclosure.
FIG. 3 is a schematic diagram of an apparatus (for a service platform) for managing an application state according to an embodiment of the present disclosure.
FIG. 4 is a schematic diagram of an apparatus (for a bearer network element) for managing an application state according to an embodiment of the present disclosure.

### DETAILED DESCRIPTION OF THE EMBODIMENTS

Hereinafter, embodiments of the present disclosure will be described in detail with reference to the drawings. It should be noted that the embodiments and the features described therein of the present application may be combined with each other arbitrarily unless conflicting one another.

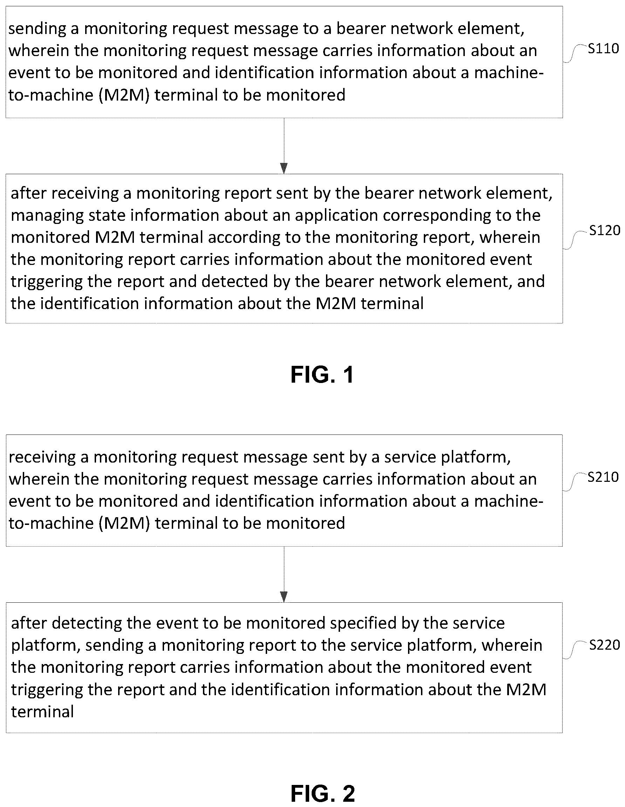

As shown in FIG. 1, an embodiment of the present disclosure provides a method for managing an application state, which may be applied to a service platform. The method includes steps S110 to S120.

At step S110, sending a monitoring request message to a bearer network element, wherein the monitoring request message carries information about an event to be monitored and identification information about a machine-to-machine (M2M) terminal to be monitored.

At step S120, after receiving a monitoring report sent by the bearer network element, managing state information about an application corresponding to the monitored M2M terminal according to the monitoring report, wherein the monitoring report carries information about the monitored event triggering the report and detected by the bearer network element, and the identification information about the M2M terminal.

In an embodiment, the monitoring request message may further include a monitoring identification assigned by the service platform.

In an embodiment, the event to be monitored includes at least one of the following events: a M2M terminal disconnection event, and a M2M terminal connection recovery event.

In an embodiment, the monitoring of the M2M terminal disconnection event refers to triggering a monitoring report when it is monitored that a M2M terminal is disconnected, and the monitoring of the M2M terminal connection recovery event refers to triggering a monitoring report when it is monitored that a connection of a M2M terminal is recovered after disconnecting.

In an embodiment, the method further includes: receiving a monitoring response message returned by the bearer network element, the monitoring response message being used for indicating that the bearer network element has received the monitoring request message successfully.

In an embodiment, the step of managing state information about the application corresponding to the monitored M2M terminal according to the monitoring report includes: querying an application entity resource carried by the M2M terminal triggering the monitoring report according to an identification, which is specified in the monitoring report, of the M2M terminal; and after finding the application entity resource carried by the M2M terminal, updating an attribute value of the application entity resource according to contents of the monitoring report.

In an embodiment, the step of updating the attribute value of the application entity resource according to the contents of the monitoring report includes: when a connection state of the M2M terminal carrying the application entity resource turns to a disconnected state from a connected state, updating a value of an attribute "state of accessibility" of the application entity resource as an "inaccessible state"; when the connection state of the M2M terminal carrying the application entity resource is recovered to the connected state from the disconnected state, updating the value of the attribute "state of accessibility" of the application entity resource as an "accessible state";

According embodiments of the present disclosure, on the service platform, management of applications is reflected by managing the following two resources: the first resource is an application entity resource which is used for storing information about the applications; the second resource is a node resource which is used for storing information about the terminals. The two resources are associated by storing addresses of corresponding node resources on the application entity resources. During querying, if it is found that an application entity resource is linked to a node containing a corresponding terminal identification by retrieving internal information, then an application corresponding to this application entity resource is the application carried by the terminal.

As shown in FIG. 2, an embodiment of the present disclosure provides a method for managing an application state, which may be applied to a bearer network element. The method includes steps S210 to S220.

At step S210, receiving a monitoring request message sent by a service platform, wherein the monitoring request message carries information about an event to be monitored and identification information about a M2M terminal to be monitored.

At step S220, after detecting the event to be monitored specified by the service platform, sending a monitoring report to the service platform, wherein the monitoring report carries information about the monitored event triggering the report and the identification information about the M2M terminal.

In an embodiment, the event to be monitored includes at least one of the following events: a M2M terminal disconnection event, and a M2M terminal connection recovery event.

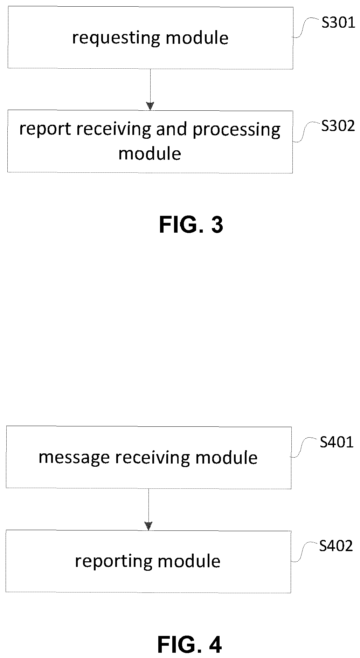

As shown in FIG. 3, an embodiment of the present disclosure provides an apparatus for managing an application state, which may be applied to a service platform. The apparatus includes: a requesting module 301 configured to send a monitoring request message to a bearer network element, wherein the monitoring request message carries information about an event to be monitored and identification information about a M2M terminal to be monitored; and a report receiving and processing module 302 configured to, after receiving a monitoring report sent by the bearer network element, manage state information about an application corresponding to the monitored M2M terminal according to the monitoring report, wherein the monitoring report carries information about the monitored event triggering the report and detected by the bearer network element, and the identification information about the M2M terminal.

In an embodiment, the event to be monitored includes at least one of the following events: a M2M terminal disconnection event, and a M2M terminal connection recovery event.

In an embodiment, the report receiving and processing module 302 is configured to manage state information about an application corresponding to the monitored M2M terminal according to the monitoring report in the following manner: querying an application entity resource carried by the M2M terminal triggering the monitoring report according to an identification, which is specified in the monitoring report, of the M2M terminal; and after finding the application entity resource carried by the M2M terminal, updating an attribute value of the application entity resource according to contents of the monitoring report.

In an embodiment, the report receiving and processing module is configured to update an attribute value of the application entity resource according to the contents of the monitoring report in the following manner: when a connection state of the M2M terminal carrying the application entity resource turns to a disconnected state from a connected state, updating a value of an attribute "state of accessibility" of the application entity resource as an "inaccessible state"; when the connection state of the M2M terminal carrying the application entity resource is recovered to the connected state from the disconnected state, updating the value of the attribute "state of accessibility" of the application entity resource as an "accessible state".

As shown in FIG. 4, an embodiment of the present disclosure provides an apparatus for managing an application state, which may be applied to a bearer network element. The apparatus includes: a message receiving module 401 configured to receive a monitoring request message sent by a service platform, wherein the monitoring request message carries information about an event to be monitored and identification information about a M2M terminal to be monitored; and a reporting module 402 configured to, after detecting the event to be monitored specified by the service platform, send a monitoring report to the service platform, wherein the monitoring report carries information about the monitored event triggering the report and the identification information about the M2M terminal.

In an embodiment, the event to be monitored includes at least one of the following events: a M2M terminal disconnection event, and a M2M terminal connection recovery event.

Furthermore, an embodiment of the present disclosure provides a computer-readable storage medium storing computer-executable instructions which, when executed by a processor, cause the processor perform the above methods.

According to the methods and the apparatus for managing an application state provided by the above embodiments of the present disclosure, the service platform issues an event to be monitored to a bearer network, instructs the bearer network to monitor the state of a specified M2M terminal in accordance with the requirement of a monitored event and report a monitoring result when a condition is met, and manages the application entity according to the monitoring result. The present disclosure can save the network resources of the MTC monitoring system.

It will be appreciated by an ordinary person skilled in the art that all or a part of the steps in the above methods may be implemented by instructing relevant hardware (e.g., a processor) by programs stored in a computer-readable storage medium, such as a read-only-memory, a magnetic disk, an optical disk, and so on. Optionally, all or a part of the steps in the above methods may be implemented by using one or more integrated circuit(s). Accordingly, the modules/units in the above embodiments may be implemented in form of hardware; e.g., respective functions thereof may be implemented by an integrated circuit. They may be implemented in form of software function modules; e.g., respective functions thereof may be implemented by executing the program instructions stored in a storage by a processor. The present application is not limited to a combination of hardware and software of any specific forms.

It should be noted that the present application may include further various embodiments. An ordinary person skilled in the art may make various modifications and variations according to the present application, with all these modifications and variations falling into the protection scope of claims appended hereto.

### INDUSTRIAL UTILITY

According to the technical solutions provided by the embodiments of the present disclosure, the service platform issues an event to be monitored to a bearer network, instructs the bearer network to monitor the state of a specified M2M terminal in accordance with the requirement of a monitored event and report a monitoring result when a condition is met, and manages the application entity according to the monitoring result. The embodiments of the present disclosure can save the network resources of the MTC monitoring system.

## Claims

1. A method for managing an application state, the method being applied to a service platform, and the method comprising:
sending a monitoring request message to a bearer network element, wherein the monitoring request message carries information about an event to be monitored and identification information about a machine-to-machine (M2M) terminal to be monitored; and
after receiving a monitoring report sent by the bearer network element, managing state information about an application corresponding to the monitored M2M terminal according to the monitoring report, wherein the monitoring report carries information about the monitored event triggering the report and detected by the bearer network element, and the identification information about the M2M terminal.

2. The method of claim 1, wherein
the event to be monitored comprises at least one of the following events: a M2M terminal disconnection event, and a M2M terminal connection recovery event.

3. The method of claim 2, wherein
the step of managing state information about the application corresponding to the monitored M2M terminal according to the monitoring report comprises:
querying an application entity resource carried by the M2M terminal triggering the monitoring report according to an identification, which is specified in the monitoring report, of the M2M terminal; and
after finding the application entity resource carried by the M2M terminal, updating an attribute value of the application entity resource according to contents of the monitoring report.

4. The method of claim 3, wherein
the step of updating the attribute value of the application entity resource according to the contents of the monitoring report comprises:
when a connection state of the M2M terminal carrying the application entity resource turns to a disconnected state from a connected state, updating a value of an attribute "state of accessibility" of the application entity resource as an "inaccessible state";
when a connection state of the M2M terminal carrying the application entity resource is recovered to the connected state from the disconnected state, updating a value of the attribute "state of accessibility" of the application entity resource as an "accessible state".

5. A method for managing an application state, the method being applied to a bearer network element, and the method comprising:
receiving a monitoring request message sent by a service platform, wherein the monitoring request message carries information about an event to be monitored and identification information about a machine-to-machine (M2M) terminal to be monitored; and
after detecting the event to be monitored specified by the service platform, sending a monitoring report to the service platform, wherein the monitoring report carries information about the monitored event triggering the report and the identification information about the M2M terminal.

6. The method of claim 5, wherein
the event to be monitored comprises at least one of the following events: a M2M terminal disconnection event, and a M2M terminal connection recovery event.

7. An apparatus for managing an application state, the apparatus being applied to a service platform, and the apparatus comprising:
a requesting module configured to send a monitoring request message to a bearer network element, wherein the monitoring request message carries information about an event to be monitored and identification information about a machine-to-machine (M2M) terminal to be monitored; and
a report receiving and processing module configured to, after receiving a monitoring report sent by the bearer network element, manage state information about an application corresponding to the monitored M2M terminal according to the monitoring report, wherein the monitoring report carries information about the monitored event triggering the report and detected by the bearer network element, and the identification information about the M2M terminal.

8. The apparatus of claim 7, wherein
the event to be monitored comprises at least one of the following events: a M2M terminal disconnection event, and a M2M terminal connection recovery event.

9. The apparatus of claim 8, wherein
the report receiving and processing module is configured to manage state information about an application corresponding to the monitored M2M terminal according to the monitoring report in the following manner:
querying an application entity resource carried by the M2M terminal triggering the monitoring report according to an identification, which is specified in the monitoring report, of the M2M terminal; and
after finding the application entity resource carried by the M2M terminal, updating an attribute value of the application entity resource according to contents of the monitoring report.

10. The apparatus of claim 9, wherein
the report receiving and processing module is configured to update an attribute value of the application entity resource according to the contents of the monitoring report in the following manner:
when a connection state of the M2M terminal carrying the application entity resource turns to a disconnected state from a connected state, updating a value of an attribute "state of accessibility" of the application entity resource as an "inaccessible state";
when a connection state of the M2M terminal carrying the application entity resource is recovered to the connected state from the disconnected state, updating a value of the attribute "state of accessibility" of the application entity resource as an "accessible state".

11. An apparatus for managing an application state, the apparatus being applied to a bearer network element, and the apparatus comprising:
a message receiving module configured to receive a monitoring request message sent by a service platform, wherein the monitoring request message carries information about an event to be monitored and identification information about a machine-to-machine (M2M) terminal to be monitored; and
a reporting module configured to, after detecting the event to be monitored specified by the service platform, send a monitoring report to the service platform, wherein the monitoring report carries information about the monitored event triggering the report and the identification information about the M2M terminal.

12. The apparatus of claim 11, wherein
the event to be monitored comprises at least one of the following events: a M2M terminal disconnection event, and a M2M terminal connection recovery event.
